## Europäisches Patentamt
## European Patent Office
## Office européen des brevets

(11) Veröffentlichungsnummer: **0 069 220**
**B1**

(12) # EUROPÄISCHE PATENTSCHRIFT

(45) Veröffentlichungstag der Patentschrift:
31.07.85

(51) Int. Cl.⁴: **C 02 F 1/72, C 02 F 1/74**

(21) Anmeldenummer: 82104179.5

(22) Anmeldetag: 13.05.82

(54) Vorrichtung zur Abwasserreinigung.

(30) Priorität: 02.07.81 DE 3126078

(43) Veröffentlichungstag der Anmeldung:
12.01.83 Patentblatt 83/2

(45) Bekanntmachung des Hinweises auf die Patenterteilung:
31.07.85 Patentblatt 85/31

(84) Benannte Vertragsstaaten:
AT BE CH FR GB IT LI NL SE

(56) Entgegenhaltungen:
EP - A - 0 062 232
DE - A - 1 952 699
DE - A - 2 326 384
DE - C - 504 992
FR - A - 575 501
US - A - 3 452 966

(73) Patentinhaber: BUCKAU - WALTHER Aktiengesellschaft,
Lindenstrasse 43, D-4048 Grevenbroich 1 (DE)

(72) Erfinder: Höke, Engelbert, Julstweg 54, D-4300 Essen
(DE)
Erfinder: Butterweck, Helgard, Freytagstrasse 5,
D-4300 Essen (DE)

BUNDESDRUCKEREI BERLIN

## Beschreibung

Die Erfindung betrifft eine Vorrichtung zur Reinigung von Abwasser durch Oxidation der Abwasserinhaltstoffe mit sauerstoffhaltigen Gasen oder Sauerstoff bei Normaldruck und Umgebungstemperatur in einem Reaktionsbecken, mit einer Zulaufeinrichtung für das Abwasser, einer Ablaufeinrichtung für das Reinwasser und einer Belüftungseinrichtung, wobei das Reaktionsbecken aus einem rechteckigen oder quadratischen Behälter besteht, der nach oben geöffnet und nach unten mit mehreren geneigten Böden versehen ist, daß innerhalb des Behälters mehrere Steigkanäle vorgesehen sind, die mit Abstand oberhalb des Bodengrundes beginnen und unterhalb des obigen Flüssigkeitsspiegels enden.

Mit einer derartigen Vorrichtung wird zur Reinigung eines Abwassers eine Schlammbelüftung durch eine biologische Oxidation durchgeführt.

Zu diesem Zweck ist es bekannt (DE-C-504 992), ein Becken mit trichterförmigen Böden zu verwenden, in denen jeweils ein Steigrohr vorgesehen ist. Etwa in halber Höhe der Steigrohre, wird diesen Druckluft zugeführt, die am oberen Rand der Steigrohre über einen ringförmigen Kanal unterhalb der Wasseroberfläche austritt.

Bei einem weiteren, vollbiologischen Abwasser-Reinigungsverfahren (DE-A-19 52 699) bildet sich in einem Behälter mit oben und unten geöffnetem Innenbehälter aufgrund gelöster Zuschlagstoffe ein Schlamm, der sich im unteren Behälterteil absetzt und von dort abgezogen wird. Hier ist nur eine Umwälzung des Abwassers mit gelösten Zuschlagstoffen und der Luft vorgesehen.

Aus der DE-C-20 50 874 ist ein Verfahren zur Reinigung von Abwässern bekannt, die mit emulgierten und gelösten oxidierbaren organischen und anorganischen Substanzen verunreinigt sind. Bei diesem bekannten Verfahren werden die zu reinigenden Abwässer in Gegenwart eines Aktivkohle- oder Ionenaustauscher-Katalysators mit Luft vermischt, und die in den Abwässern enthaltenen oxidierbaren Substanzen werden durch eine katalysierte Oxidationsreaktion bei Normaldruck und Umgebungstemperatur, also bei ca. 1 bar und ca. 5—50°C, abgebaut. Dieses Reinigungsverfahren wird in einer mit dem Katalysator gefüllten Reaktionskammer durchgeführt, an deren Boden Belüftungsdüsen angeordnet sind, durch die in das Abwasser sauerstoffhaltige Gase eingebracht werden. Der Reaktionskammer wird kontinuierlich Abwasser zugeführt und gereinigtes Abwasser entnommen. Die Katalysatorteilchen werden durch die Strömung des Abwassers und der Luft in der Schwebe gehalten und verwirbelt, so daß den Reaktionspartnern ständig eine ausreichend große Katalysatoroberfläche angeboten wird. Es wurde auch vorgeschlagen, die Reaktionskammer mit einem Rührwerk oder einer Umwälzpumpe auszustatten, um die katalysierte Oxidationsreaktion zu beschleunigen.

Die bekannte Reaktionskammer hat den Nachteil, daß sie zur Aufrechterhaltung des Katalysator-Wirbelbettes größere Energiemengen benötigt, die durch den Luftstrom eingebracht werden müssen. Es werden ca. 5 m³ Luft pro m³ Belüftungsraum benötigt.

Außerdem wird durch den kräftigen Luftstrom immer ein gewisser Teil des Katalysators in unerwünschter Weise zerrieben. Durch den Einsatz von Rührwerken konnte zwar die erforderliche Luftmenge zur Aufrechterhaltung des Katalysator-Wirbelbettes, nicht aber der Katalysatorabrieb reduziert werden. Auch das Umpumpen des Katalysator-Abwasser-Gemisches zum Zwecke der Wirbelbetterzeugung hat sich nicht bewährt, da der Katalysatorabrieb zu stark ist. Außerdem ist die von den Rührwerken und Pumpen benötigte Energiemenge größer als die Energiemenge, die mit der Verminderung der Luftmenge durch den Einsatz von Rührwerken und Pumpen eingespart wird.

Es ist eine Beckenform eingesetzt worden, die als Doppelbecken bezeichnet, aus zwei spiegelbildlich gegeneinander versetzten Becken besteht, wobei die Mittelwand keine Einlauf- und Auslaufeinrichtungen enthielt. Das Wasser strömt oben über diese Mittelwand. In Hauptströmungsrichtung, im Bereich der Mittelwand, ist auf beiden Seiten von unten nach oben eine Umlenkung angeordnet, die die Ausbildung einer vertikalen Kreisströmung begünstigen soll.

Nachteilig bei diesen bisher eingesetzten Beckenformen ist neben der Begrenzung der Beckenbreite die Tatsache, daß Kontaktmasse, die z. B. bei einer Beckenüberlastung in Wasserfließrichtung über die Mittelwand gelangt, nicht wieder entgegen der Fließrichtung zurückgeführt wird. Bei unterschiedlicher Luftverteilung wird dazu Kontaktmasse in Richtung des geringeren Luftaustrittes gefördert, was zu erheblichen Unregelmäßigkeiten führt. Die Kontaktmasse lagert sich vollkommen ungeordnet in den Becken ab und geht für das Wirbelbett verloren bzw. verhindert an den Ablagerungsstellen den Luftaustritt.

Mit mechanischen Einrichtungen wie Greifer oder Spezialpumpen wäre der Rücktransport der Kontaktmasse zwar möglich, doch sind diese Maßnahmen umständlich, kostenaufwendig und oft nicht praktikabel. Um die genannten Mängel zu vermeiden, wurden auch schon Becken eingesetzt, bei denen eine Pfropfenströmung erzeugt wurde. Dieses hatte aber zur Folge, daß das Kontaktmaterial gänzlich einseitig abgelagert wurde und selbst noch den Ablauf verstopfte.

Der Erfindung liegt die Aufgabe zugrunde, eine Vorrichtung zur Durchführung der katalytisch-oxidativen Abwasserreinigung zu schaffen, die zur Erzeugung des Katalysator-Wirbelbettes und der Abwasserströmung möglichst wenig Energie bzw. Luft benötigt und in der die Zerstörung der Katalysatorteilchen durch Abrieb stark eingeschränkt ist und daß weiterhin die vorstehend geschilderten Nachteile vermieden werden.

Ausgehend von der DE-C-504 992 wird diese Aufgabe nach der Erfindung dadurch gelöst, daß die Vorrichtung so ausgebaut ist, daß die Reaktion in Gegenwart fester Katalysatorteilchen erfolgen kann und daß die aus einem über die gesamte Behälterlänge reichenden, gelochten Rohr bestehende Belüftungseinrichtung unterhalb eines rechteckigen, die Behälterlänge überspannenden Steigkanals an der tiefsten Stelle des Behälterbodens angeordnet ist, wobei der Abstand zwischen dem Belüftungsrohr und dem unteren Ende des Steigkanals das 0,5—3,0fache der Breite des Steigkanales beträgt, und daß die Steigkanäle durch Querwände in mehrere Kammern unterteilt sind und jeder Kammer eine oder mehrere Düsen des Belüftungsrohres zugeordnet sind.

Mit dieser Maßnahme wird das Wasser-Kontaktmasse-Luft-Gemisch in einer Dreiphasenströmung vom Boden des Behälters zur Wasseroberfläche gefördert, wobei die Strömung gleichmäßig gerichtet ist. Der Ausgleich der Kontaktmasse erfolgt selbsttätig von Kammer zu Kammer. Hat sich ein Teil der Kontaktmasse im Trichter abgesetzt, so erwirkt die Strömung eine automatische Rückführung. Der Anteil der Kontaktmasse bleibt somit in allen Kammern stets gleich.

Die aus dem gelochten Rohr bestehende Belüftungseinrichtung kann die gesamte Behälterlänge überspannen und ist somit unterhalb des gesamten aus einzelnen Kammern bestehenden Steigkanales angeordnet. Um die Luftzufuhr zu verbessern ist erfindungsgemäß vorgesehen, daß die Öffnungen in dem Rohr der Belüftungseinrichtung als Düsen ausgebildet sind. Derartige Düsen sind aus der US-A-34 52 966 bei einem Wirbelbelüfter bekannt.

Ein besonders vorteilhaftes Verfahren zur Reinigung von Abwasser wird in einer Vorrichtung nach den Ansprüchen 1 und 2 gesehen, die darin besteht, daß das Reaktionsbecken bis zu 10 Vol.-% mit Katalysatorteilchen gefüllt ist.

Um das Übertreten der Kontaktmasse von einem Beckenteil zum anderen zu verhindern, ist vorgesehen, daß oberhalb der Berührungsstellen der Böden leichte Trennwände angeordnet sind, durch die das Reaktionsbecken in mehrere Kammern unterteilt ist, die nacheinander vom Wasser durchfließbar sind, wobei die Überläufe von Kammer zu Kammer im unteren Bereich der Trennwände vorgesehen sind. Dabei können die Trennwände aus Sieben mit 0,6 mm Maschenweite bestehen. Trennwände aus abwasserfesten Sieben sind aus der DE-A-19 52 699 bekannt.

Zur Verbesserung des Ablaufes des Reinwassers ist vorgesehen, daß die dem Auslauf zugeordnete Kammer mit einer einen Kanal bildenden Seitenwand versehen ist, die mit der Behälterwand einen unteren Eintrittsspalt bildet.

In weiterer Ausgestaltung der Erfindung ist vorgesehen, daß die tiefste Stelle des trichterförmigen Bodens und der Steigkanal gegenüber der Mittelachse der Kammer um 10% versetzt sind.

Die Länge der Reaktionsbecken ist meist nicht eingeschränkt, wohl aber die Beckenbreite und die Beckenhöhe. Um den erforderlichen Reaktionsraum zu erhalten, werden deshalb mehrere Kammern hintereinandergeschaltet, die nur einen Kammereinlauf mit Einlaufverteilung und einen Kammerauslauf mit Überlaufkante und Auslauftauchwand aufweisen. Dabei kann die Kontaktmasse in einem Wirbelbett so verteilt werden, daß der Anteil ca. 3% pro m³ Belüftungsraum beträgt.

Ein Ausführungsbeispiel der Erfindung ist in der Zeichnung dargestellt und wird im nachfolgenden näher beschrieben. Es zeigt
Fig. 1 einen Querschnitt,
Fig. 2 eine Draufsicht.

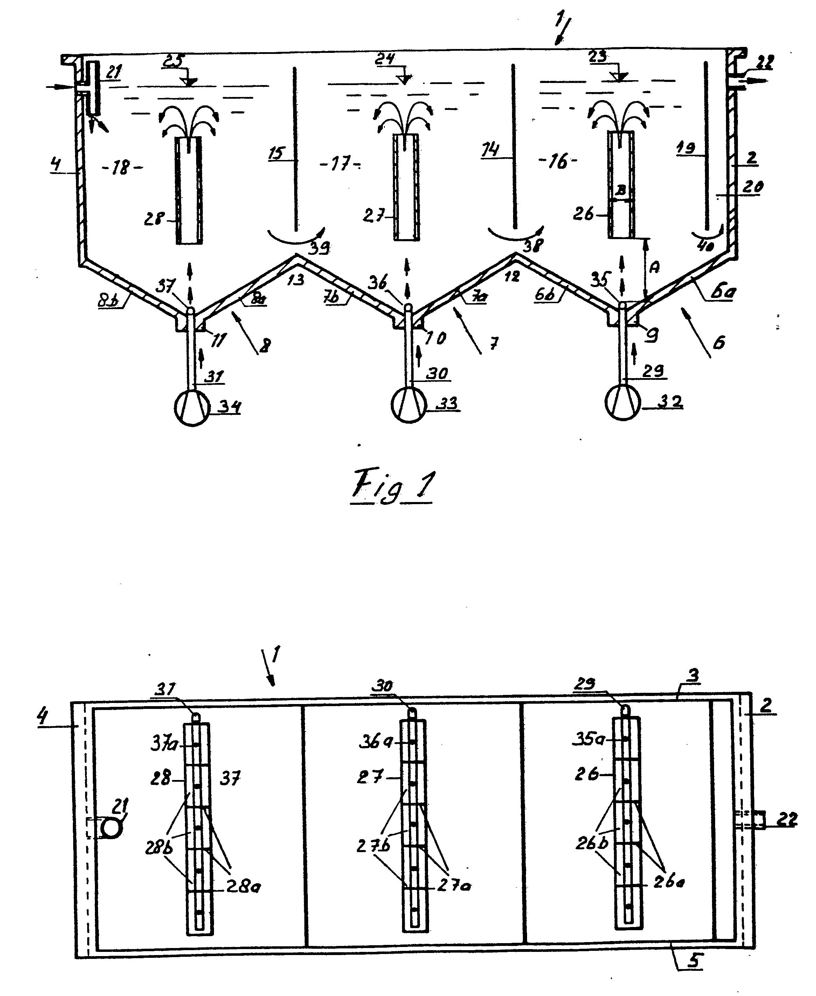

Im Ausführungsbeispiel ist das Reaktionsbecken 1 durch die beiden Behälterseitenwände 2 und 4 bzw. die beiden Behälterlängswände 3 und 5 gebildet. Trennwände 14 und 15 bilden einzelne Behandlungskammern 16, 17 und 18. Unterhalb jeder dieser Kammern ist ein Boden 6, 7 und 8 vorgesehen, die durch geneigte Bodenteile 6a, 6b bzw. 7a, 7b oder 8a bzw. 8b gebildet sind. Die Bodenteile sind einerseits an ihren tiefsten Stellen 9, 10 und 11 miteinander verbunden und außerdem an ihren höchsten Stellen 12 und 13 dachförmig miteinander verbunden. Die dachförmigen Verbindungen 12 und 13 befinden sich unterhalb der Trennwände 14 und 15. Innerhalb der Kammer 16 ist eine weitere Leitwand 19 mit Abstand vor der Behälterwand 2 angeordnet, die gemeinsam einen Kanal 20 mit einem unteren Eintrittsspalt 40 bilden. Die Wand 19 ist bis in den Bereich des Auslasses 22 für das Reinwasser geführt. Die Behälterwand 4 ist mit einem Einlaß 21 für das Abwasser versehen. Die Leitwände 14 und 15 sind so angeordnet, daß sich zwischen der Unterkante dieser Wände und den Berührungsstellen 12 und 13 der Böden 6 bis 8 jeweils eine Übertrittsöffnung 38 und 39 einstellt, wodurch sich innerhalb der Kammern 16 bis 18 gleichmäßig hohe Wasserspiegel 23, 24 und 25 einstellen. Fernerhin ist jede Kammer 16 bis 18 mit einem Steigkanal 26, 27 und 28 versehen, die mit einem bestimmten Abstand »A« oberhalb der tiefsten Bodenstellen 9, 10 und 11 beginnen und im oberen Bereich unterhalb der Wasserspiegel 23 bis 25 enden. Die Kanäle 26 bis 28 sind durch Trennwände 26a, 27a und 28a in einzelne Kammern 26b, 27b bzw. 28b unterteilt. Unterhalb der Steigkanäle 26 bis 28 befinden sich Belüftungsrohre 35, 36 und 37 mit düsenförmigen Öffnungen 35a, 36a und 37a, die so angeordnet sind, daß jeder Kammer 26, 27 oder 28 eine oder mehrere der Düsen 35a, 36a oder 37a zugeordnet sind. Die Belüftungsrohre 35 bis 37 werden über Zulaufleitungen 29 bis 31 durch Gebläse 32 bis 34 beaufschlagt.

Das Abwasser wird über den Stutzen 21 der Kammer 18 zugeführt. Mittels der aus den Düsen 37a austretenden Luft wird das Abwasser innerhalb des Steigkanales 28 noch oben geführt, tritt aus diesem aus und fällt wiederum nach unten ab. Dieser Vorgang wiederholt sich so lange, bis die Abwasserteilchen über die Übertrittsöffnung 39 in die Kammer 17 überströmen und sich dort der gleiche Vorgang wiederholt. Dieser Vorgang wiederholt sich ebenso in der Kammer 16. Das gereinigte Wasser verläßt den Kanal 20 über den Auslaß 22 das Reaktionsbecken 1. Sollten sich beispielsweise innerhalb einer Kammer zu viele Katalysatorteilchen angesammelt haben und innerhalb des Bodenbereiches absetzen, so werden zufolge der wirbelnden Strömung diese nach oben getrieben und können sich über die Öffnungen 38 und 39 auf alle drei Kammern gleichmäßig verteilen. Die Praxis hat gezeigt, daß trotz einer Wasserströmung vom Einlaß 21 zum Auslaß 22 hin sich die Katalysatorteilchen entgegen dieser Strömung gleichmäßig auf die einzelnen Kammern verteilen.

**Patentansprüche**

1. Vorrichtung zur Reinigung von Abwasser durch Oxidation der Abwasserinhaltsstoffe mit sauerstoffhaltigen Gasen oder Sauerstoff bei Normaldruck und Umgebungstemperatur in einem Reaktionsbecken mit einer Zulaufeinrichtung für das Abwasser, einer Ablaufeinrichtung für das Reinwasser und einer Belüftungseinrichtung, wobei das Reaktionsbecken aus einem rechteckigen oder quadratischen Behälter besteht, der nach oben geöffnet und nach unten mit mehreren geneigten Böden versehen ist, daß innerhalb des Behälters mehrere Steigkanäle vorgesehen sind, die mit Abstand oberhalb des Bodengrundes beginnen und unterhalb des obigen Flüssigkeitsspiegels enden, dadurch gekennzeichnet, daß die Vorrichtung so ausgebaut ist, daß die Reaktion in Gegenwart fester Katalysatorteilchen erfolgen kann, und daß die aus einem über die gesamte Behälterlänge reichenden, gelochten Rohr (35) bestehende Belüftungseinrichtung unterhalb eines rechteckigen, die Behälterlänge überspannenden Steigkanals (26) an der tiefsten Stelle (9) des Behälterbodens (6) angeordnet ist, wobei der Abstand (A) zwischen dem Belüftungsrohr (35) und dem unteren Ende des Steigkanals (26) das 0,5—3,0fache der Breite (B) des Steigkanals (26) beträgt, und daß die Steigkanäle (26) durch Querwände (26a) in mehreren Kammern (26b) unterteilt sind und jeder Kammer (26b) eine oder mehrere Düsen (35a) des Belüftungsrohres (35) zugeordnet sind.

2. Vorrichtung nach Anspruch 1, dadurch gekennzeichnet, daß die Öffnungen (35a) in dem Rohr (35) in an sich bekannter Weise als Düsen ausgebildet sind.

3. Verfahren zur Reinigung von Abwasser in einer Vorrichtung nach den Ansprüchen 1 bis 2, dadurch gekennzeichnet, daß das Reaktionsbekken bis zu 10 Vol. -% mit Katalysatorteilchen gefüllt ist.

4. Vorrichtung nach den Ansprüchen 1 bis 2, dadurch gekennzeichnet, daß oberhalb der Berührungsstellen der Böden leichte Trennwände (14, 15) angeordnet sind, durch die das Reaktionsbecken (1) in mehrere Kammern (16—18) unterteilt ist, die nacheinander vom Wasser durchfließbar sind, wobei die Überläufe (38, 39) von Kammer zu Kammer im unteren Bereich der Trennwände (14, 15) vorgesehen sind.

5. Vorrichtung nach Anspruch 1, dadurch gekennzeichnet, daß die Trennwände (14, 15) aus an sich bekannten Sieben mit 0,6 mm Maschenweite bestehen.

6. Vorrichtung nach Anspruch 5, dadurch gekennzeichnet, daß nur die untere Hälfte der Trennwände (14, 15) als Sieb ausgebildet ist.

7. Vorrichtung nach den Ansprüchen 1 bis 6, dadurch gekennzeichnet, daß die dem Auslauf (22) zugeordnete Kammer (16) mit einer einen Kanal (20) bildenden Seitenwand (19) versehen ist, die mit der Behälterwand (2) einen unteren Eintrittsspalt (40) bildet.

8. Vorrichtung nach den Ansprüchen 1 bis 7, dadurch gekennzeichnet, daß die tiefste Stelle des trichterförmigen Bodens (6—8) und der Steigkanal (26—28) gegenüber der Mittelachse der Kammer (16—18) um 10% versetzt sind.

9. Verfahren zur Reinigung von Abwasser nach Anspruch 3 oder in einer Vorrichtung nach den Ansprüchen 1, 2, 4 bis 8, dadurch gekennzeichnet, daß der Belüftungsraum bezogen auf sein Volumen mit 3%/m³ Kontaktmasse gefüllt ist.

**Claims**

1. An apparatus for the purification of waste water through oxidation of the substances contained in the waste water with an oxygen-containing gas or oxygen at normal pressure and ambient temperature in a reaction vessel provided with a device for supplying the waste water, a device for discharging the pure water and an aeration device, the reaction vessel comprising a rectangular or square container which is open at the top and which is provided with several inclined bases at the bottom, there being several uptakes inside the container which begin above the bottom of the base and end below the upper liquid level, characterised in that the apparatus is constructed in such a way that the reaction can take place in the presence of solid catalyst particles; in that the aeration device, which comprises a perforated pipe (35) extending over the entire width of the container, is situated at the deepest point (9) of the container base (6) below a rectangular uptake (26) spanning the width of the container, the distance (A) between the aeration pipe (35) and the bottom end of the uptake (26) being 0,5—3,0 times the width (B) of the uptake (26); and in that the uptakes (26) are divided by transverse walls (26a) into several chambers (26b), and there are associated with each chamber (26b) one or more perforations (35a) of the aeration pipe (35).

2. An apparatus according to Claim 1, characterised in that the perforations (35a) in the pipe (35) are formed as nozzles in a known manner.

3. A method of purifying waste water in an apparatus according to Claim 1 or 2, characterised in that the reaction vessel is filled to 10% by volume with catalyst particles.

4. An apparatus according to Claim 1 or 2, characterised in that there are arranged, above the contact places of the bases, light dividing walls (14, 15) which divide the reaction vessel (1) into several compartments (16—18) through which water successively flows, the flow (38, 39) from chamber being provided in the area below the dividing walls (14, 15).

5. An apparatus according to Claim 4, characterised in that the dividing walls (14, 15) comprise sieves, in themselves known, having 0,6 mm mesh.

6. An apparatus according to Claim 5, characterised in that only the lower half of the dividing walls (14, 15) is formed as a sieve.

7. An apparatus according to Claims 1, 2 and 4 to 6, characterised in that the compartment (16) which is associated with the outlet (22) is provided with a side wall (19) forming a channel (20), which side wall forms, with the container wall (2), a bottom entrance gap (40).

8. An apparatus according to Claims 1, 2 and 4 to 7, characterised in that the deepest point of the funnel-shaped base (6—8) and the uptake (26—28) are offset by 10% relative to the centre line fo the chamber (16—18).

9. A method of purifying waste water according to Claim 3 or in an apparatus according to Claims 1, 2, 4 to 8, characterised in that the aeration area is filled with 3%/m³ contact mass relative to its volume.

## Revendications

1. Dispositif d'épuration de l'eau résiduaire par oxydation, par des gaz contenant de l'oxygène ou par de l'oxygène sous la pression normale et la température ambiante, des substances contenues dans l'eau résiduaire dans un bassin de réaction comportant une admission de l'eau résiduaire, une sortie de l'eau pure et une installation d'aération, le bassin de réaction consistant en un récipient rectangulaire ou carré, qui est ouvert vers le haut et est muni vers le bas de plusieurs fonds inclinés, le dispositif comportant à l'intérieur du récipient plusieurs conduits ascendants qui commencent à une certaine distance au-dessus du fond et débouchent au-dessous du niveau supérieur du liquide, dispositif caractérisé en ce qu'il est agencé de manière que la réaction puisse se produire en présence de particules solides de catalyseur et en ce qu'une installation d'aération, consistant en un tube perforé (35) s'étendant sur la totalité de la longueur du récipient, est placée au-dessous d'un conduit ascendant (26) rectangulaire, s'étendant sur la longueur du récipient, à l'endroit le plus profond (9) du fond (6) du récipient, la distance (A) entre le tube d'aération (35) et l'extrémité inférieure du conduit ascendant (26) représentant 0,5 à 3,0 fois la largeur (B) du conduit ascendant (26), et en ce que les conduits ascendants (26) sont subdivisés par des cloisons transversales (26a) en plusieurs chambres (26b) et en ce qu'un ou plusieurs ajutages (35a) du tube d'aération (35) correspondent à chaque chambre (26b).

2. Dispositif selon la revendication 1, caractérisé en ce que les ouvertures (35a) ménagées dans le tube (35) sont réalisées de façon connue en soi en forme d'ajutages ou buses.

3. Procédé d'épuration de l'eau résiduaire dans un dispositif selon la revendication 1 et 2, caractérisé en ce que le récipient de réaction est empli, jusqu'à 10% en volume, de particules de catalyseur.

4. Dispositif selon les revendications 1 à 2, caractérisé en ce que, au-dessus des zones de tranquillisation des fonds, sont disposées de légères cloisons séparatrices (14, 15) qui subdivisent le bassin de réaction (1) en plusieurs chambres (16—18), pouvant être successivement parcourues par l'eau, des passages (38, 39) d'une chambre à l'autre étant prévus à la partie inférieure des cloisons séparatrices (14, 15).

5. Dispositif selon la revendication 1, caractérisé en ce que les cloisons séparatrices (14, 15) consistent en des tamis, connus en soi, d'une ouverture de maille de 0,6 mm.

Dispositif selon la revendication 5, caractérisé en ce que seule la moitié inférieure des cloisons séparatrices (14, 15) est en forme de tamis.

7. Dispositif selon la revendication 1 à 6, caractérisé en ce que la chambre (16) correspondant à la sortie (22) est munie d'une cloison latérale (19) délimitant un conduit (20) et formant avec la paroi (2) du récipient une fente inférieure (40) d'entrée.

8. Dispositif selon les revendications 1 à 7, caractérisé en ce que les zones les plus profondes du fond (6—8) en forme d'entonnoir et des conduits ascendants (26—28) sont décal és de 10% par rapport à l'axe médian de chacune des chambres (16—18).

9. Procédé d'épuration de l'eau résiduaire selon la revendication 3 ou dans un dispositif selon les revendications 1, 2, 4 à 8, caractérisé en ce que le volume d'aération est empli de 3% de matière à rôle de catalyseur par m³ de ce volume d'aération.

*Fig 1*